# DEMANDE DE BREVET EUROPEEN

(11) **EP 1 339 016 A1**
(43) Date de publication de la demande: **27.08.2003**
(21) Numéro de dépôt: 02002306.5
(22) Date de dépôt: 30.01.2002
(51) Int. Cl.: G06K 19/10, G11B 7/00

(54) **Support de données numériques**

(71) Demandeur: KHEPHREN SA, F-90000 Belfort (FR)
(72) Inventeur: Monnier, Jean-Claude, F-90130 Petit-Croix (FR); Cottin, Nathanaêl, F-25200 Montbeliard (FR); Hansz, Bernard, F-25600 Nommay (FR); Mignot, Bernard, F-90120 Morvillars (FR); Wack, Maxime, F-9000 Belfort (FR); Souabni, Moez, 2026 Sidi Bousaid (TN)
(74) Mandataire: Nithardt, Roland

(57) **Abrégé**

Le support (10) de données numériques comporte un substrat (11) qui porte au moins une zone d'enregistrement de données numériques à lecture optique (12) et au moins une plage d'identification (13a, 13b) du titulaire de ce support.

La zone d'enregistrement de données numériques à lecture optique (12) est préenregistrée et contient des premières informations codées (15a) agencées pour permettre au titulaire d'effectuer une signature électronique apposée par le titulaire et exigée pour une intervention déterminée exécutée par ce titulaire. Elle contient aussi des deuxièmes informations codées (15b) pour permettre un déclenchement automatique d'un appareil de lecture, des troisièmes informations codées (15c) agencées pour protéger les données contre la duplication, des quatrièmes informations codées (15d) pour séquencer les premières informations codées (15a) et des cinquièmes informations codées (15e) pour procéder à une connexion automatique à un serveur central.

## Description

La présente invention concerne un support de données numériques comportant un substrat qui porte au moins une zone d'enregistrement de données numériques à lecture optique et au moins une plage d'identification du titulaire de ce support.

On connaît déjà des cartes, ayant approximativement le format courant des cartes bancaires, qui portent une plage susceptible d'enregistrer des données numériques à lecture optique.

Ces cartes sont habituellement utilisées comme des supports d'information destinés à un usage publicitaire, notamment la présentation d'un produit ou d'un catalogue de produits, d'une notice d'utilisation, d'une carte de visite ou similaires.

On connaît par ailleurs les cartes dites cartes à puce qui contiennent des informations codées. La capacité de mémoire des circuits intégrés qui constituent les puces est de 128 ou 256 bytes, c'est-à-dire particulièrement limitée.

C'est pour cette raison que les cartes bancaires actuelles n'offrent qu'une sécurité relative et que les fraudes à la carte bancaire sont particulièrement nombreuses.

Le but de la présente invention est de résoudre le problème de la sécurité des transactions en offrant des moyens sûrs pour contrecarrer les tentatives de fraude.

Ce but est atteint par le support de données numériques spécifié en préambule et caractérisé en ce que ladite zone d'enregistrement de données numériques à lecture optique est préenregistrée et contient des premières informations codées agencées pour permettre au titulaire d'effectuer une signature électronique apposée par ledit titulaire et exigée pour une intervention déterminée exécutée par ce titulaire.

Selon un mode de réalisation préféré, ladite intervention exécutée par ledit titulaire est une transaction financière.

Dans le cadre d'une autre application, ladite intervention exécutée par ledit titulaire est une validation de document.

Pour une autre application encore, ladite intervention effectuée par ledit titulaire est une validation d'un droit d'accès.

Selon un mode d'utilisation avantageux, ladite signature apposée par ledit titulaire est une signature dite multiple de même niveau.

Selon un autre mode d'utilisation avantageux, ladite signature apposée par ledit titulaire est une sur-signature de validation d'autres signatures apposées antérieurement par d'autres signataires.

D'une manière préférentielle, ladite zone d'enregistrement de données numériques à lecture optique est pré-enregistrée et contient des deuxièmes informations codées agencées pour permettre un déclenchement automatique d'un appareil de lecture desdites données. Ledit appareil de lecture est avantageusement un ordinateur et lesdites deuxièmes informations codées sont enregistrées dans un langage compatible avec tous les ordinateurs.

De façon particulièrement avantageuse, ladite zone d'enregistrement de données numériques à lecture optique est préenregistrée et contient des troisièmes informations codées agencées pour protéger ces données contre la duplication.

Egalement de façon avantageuse, ladite zone d'enregistrement de données numériques à lecture optique est préenregistrée et contient des quatrièmes informations codées agencées pour séquencer lesdites premières informations codées.

De façon préférée, lesdites quatrièmes informations codées agencées pour séquencer lesdites premières informations codées sont définies de manière à distribuer ces premières informations de façon prédéterminée selon des pistes différentes de ladite zone d'enregistrement de données numériques à lecture optique.

Avantageusement ladite zone d'enregistrement de données numériques à lecture optique est préenregistrée et contient des cinquièmes informations codées agencées pour procéder à une connexion automatique de l'appareil de lecture à un serveur central dans lequel sont stockées lesdites premières données numériques en vue d'une validation de ces données.

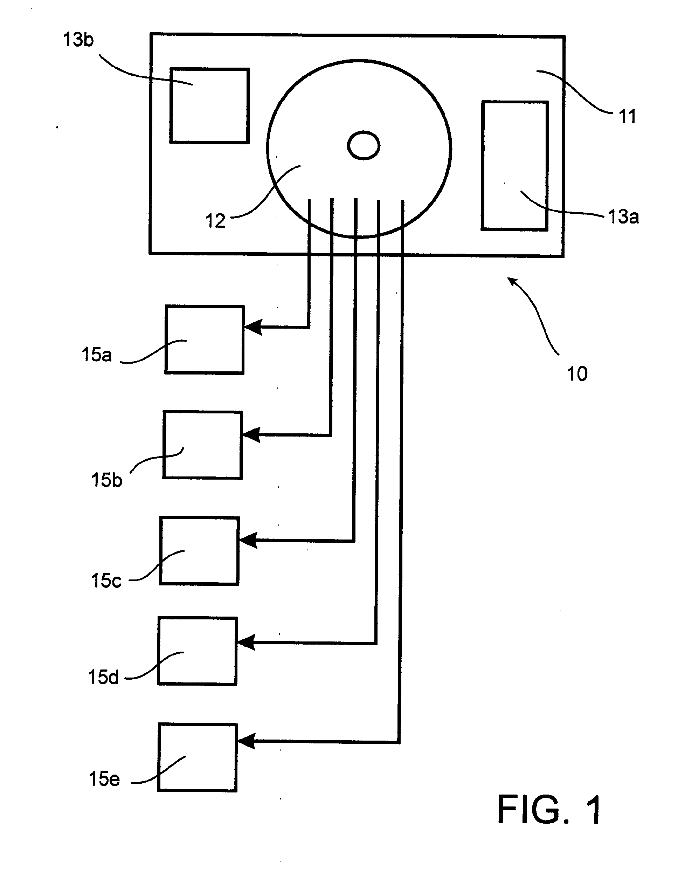

La présente invention et ses avantages seront mieux compris à la lecture de la description détaillée d'une mise en oeuvre préférée du support de l'invention, en référence au dessin annexé donné à titre indicatif et non limitatif, dans lequel:
- la figure unique est une vue schématique illustrant une forme de réalisation préférée du support selon l'invention.

En référence à la figure unique, le support de données numériques 10 selon l'invention comporte un substrat 11 qui porte une zone d'enregistrement 12 de données numériques à lecture optique et au moins une plage 13a, 13b d'identification du titulaire de ce support. La zone d'enregistrement 12 de données numériques à lecture optique est de préférence disposée de façon centrale et est agencée de manière à pouvoir être lue dans un ordinateur classique. La plage 13a d'identification du titulaire contient par exemple les coordonnées personnelles du titulaire telles que nom, prénom, date de naissance et adresse etc. La plage 13b peut contenir la photographie du titulaire.

La zone d'enregistrement de données numériques à lecture optique 12 contient des données préenregistrées et en particulier des premières informations codées 15a agencées pour permettre au titulaire d'apposer une signature électronique exigée pour valider une intervention déterminée exécutée par lui et pour son compte. Il peut s'agir notamment d'une transaction financière, par exemple une opération bancaire, la transmission d'un ordre de virement ou une simple vérification de son compte ou similaire. Il peut également s'agir d'une validation d'un document par le titulaire dans le contexte d'une intervention déterminée, la validation d'un acte officiel, l'approbation de comptes ou d'un bilan, l'accord sur un projet de contrat, etc. Une autre fonction peut être la validation d'un droit d'accès à un site protégé par exemple. La signature électronique apposée par le titulaire peut être une signature dite signature multiple. Cette signature peut être du même « niveau » que d'autres signatures, c'est-à-dire de même importance ou une « sur-signature » qui est une signature de validation d'une signature apposée antérieurement ou de plusieurs signatures antérieures de même niveau ou de niveaux différents.

La zone d'enregistrement de données numériques à lecture optique 12 contient des deuxièmes informations codées 15b agencées pour permettre un déclenchement automatique d'un appareil de lecture desdites données. Ce déclenchement s'effectue de préférence automatiquement au moment où le support est introduit dans le lecteur de disques optiques de l'ordinateur. Ces deuxièmes informations 15b sont enregistrées dans un langage aussi universel que possible compatible avec sensiblement tous les ordinateurs.

La zone d'enregistrement de données numériques à lecture optique 12 contient des troisièmes informations codées 15c agencées pour protéger ces données contre la duplication. Ces informations sont destinées à identifier une tentative de duplication et à modifier certaines données de telle manière que cette tentative apparaisse au moment d'une nouvelle utilisation. A titre d'exemple, cette modification pourrait être liée à une incrémentation aboutissant à la modification d'un numéro d'ordre, d'une date ou de toute autre référence interne masquée.

La zone d'enregistrement de données numériques à lecture optique 12 contient des quatrièmes informations codées 15d agencées pour séquencer lesdites premières informations 15a. Ces quatrièmes informations sont destinées à structurer l'ordre de séquences d'enregistrement et de lecture des premières informations 15a stockées dans la zone où sont enregistrées les données numériques correspondantes. Le but de cette technique est de rendre plus difficile la copie des informations et surtout, en cas de copie de les rendre incompréhensibles ou du moins plus difficiles à déchiffrer. Les premières informations 15a sont distribuées de façon organisée selon des pistes et le code correspondant aux dites quatrièmes informations 15d consiste à reconstituer l'ordre d'enregistrement et d'appliquer le même ordre pour la lecture des premières informations 15a. Il est évident que le principe de « séquençage » peut être appliqué à toutes les autres informations stockées.

La zone d'enregistrement de données numériques à lecture optique 12 contient des cinquièmes informations codées 15e agencées pour procéder à une connexion automatique de l'appareil de lecture à un serveur central dans lequel sont stockées lesdites premières données numériques en vue de valider ces données. Une telle connexion automatique est avantageuse parce qu'elle permet de vérifier chaque opération effectuée avec le support, les données qu'il porte. Ce moyen ajoute un élément de sécurité supplémentaire pour une utilisation efficace et sûre de ce support.

## Revendications

1. Support de données numériques (10) comportant un substrat (11) qui porte au moins une zone d'enregistrement de données numériques à lecture optique (12) et au moins une plage d'identification du titulaire (13a, 13b) de ce support, **caractérisé en ce que** ladite zone d'enregistrement de données numériques à lecture optique (12) est préenregistrée et contient des premières informations codées (15a) agencées pour permettre au titulaire d'effectuer une signature électronique apposée par ledit titulaire et exigée pour une intervention déterminée exécutée par ce titulaire.

2. Support de données numériques selon la revendication 1, **caractérisé en ce que** ladite intervention exécutée par ledit titulaire est une transaction financière.

3. Support de données numériques selon la revendication 1, **caractérisé en ce que** ladite intervention exécutée par ledit titulaire est une validation de document.

4. Support de données numériques selon la revendication 1, **caractérisé en ce que** ladite intervention effectuée par ledit titulaire est une validation d'un droit d'accès.

5. Support de données numériques selon la revendication 1, **caractérisé en ce que** ladite signature apposée par ledit titulaire est une signature dite multiple de même niveau.

6. Support de données numériques selon la revendication 1, **caractérisé en ce que** ladite signature apposée par ledit titulaire est une sur-signature de validation d'autres signatures apposées antérieurement par d'autres signataires.

7. Support de données numériques selon la revendication 1, **caractérisé en ce que** ladite zone d'enregistrement de données numériques à lecture optique (12) contient des deuxièmes informations codées (15b) agencées pour permettre un déclenchement automatique d'un appareil de lecture desdites données.

8. Support de données numériques selon la revendication 7, **caractérisé en ce que** ledit appareil de lecture est un ordinateur et **en ce que** lesdites deuxièmes informations codées (15b) sont enregistrées dans un langage compatible avec tous les ordinateurs.

9. Support de données numériques selon la revendication 1, **caractérisé en ce que** ladite zone d'enregistrement de données numériques à lecture optique (12) contient des troisièmes informations codées (15c) agencées pour protéger ces données contre la duplication.

10. Support de données numériques selon la revendication 1, **caractérisé en ce que** ladite zone d'enregistrement de données numériques à lecture optique (12) est préenregistrée et contient des quatrièmes informations codées (15d) agencées pour séquencer lesdites premières informations codées.

11. Support de données numériques selon la revendication 10, **caractérisé en ce que** lesdites quatrièmes informations codées (15d) agencées pour séquencer lesdites premières informations codées (15a) sont définies de manière à distribuer ces premières informations de façon prédéterminée selon des pistes différentes de ladite zone d'enregistrement de données numériques à lecture optique (12).

12. Support de données numériques selon la revendication 1, **caractérisé en ce que** ladite zone d'enregistrement de données numériques à lecture optique (12) contient des cinquièmes informations codées (15e) agencées pour procéder à une connexion automatique de l'appareil de lecture à un serveur central dans lequel sont stockées lesdites premières données numériques en vue d'une validation de ces données.
